# EUROPEAN PATENT APPLICATION

(11) **EP 2 693 604 A1**
(43) Date of publication of application: **05.02.2014**
(21) Application number: 13178289.8
(22) Date of filing: 26.07.2013
(51) Int. Cl.: H02K 1/14, H02K 1/12, H02K 1/22, H02K 15/02, H01F 27/245, H01F 27/26

(54) **Element for lamination of an electrical machine, lamination made of said elements and method and apparatus for its manufacture**

(30) Priority: 31.07.2012 IT VI20120192
(71) Applicant: Veco S.P.A., 37040 Bevilacqua (VR) (IT)
(72) Inventor: Concato, Piergiuseppe, 36071 ARZIGNANO (VI) (IT)
(74) Representative: Bonini, Ercole

(57) **Abstract**

The invention is a shaped metallic element (1) for making laminations (100) of a stator (200) and/or a rotor (300) of a rotary electric machine (400) or for making the laminated ferromagnetic core (500) of a static electric machine, comprising two sides (2, 3) suited to be fixedly joined to corresponding sides (2, 3) of two shaped metallic elements (1) arranged so that they are adjacent to said shaped metallic element (1). In the shaped metallic element (1) the two sides (2, 3) have a shaped profile (4) matching the shaped profile of the sides (2, 3) of the adjacent shaped metallic elements (1) so that the shaped metallic elements (1) can be fixedly coupled with each other through interference.

## Description

The invention concerns a shaped metallic element suited to be coupled, at the level of at least two of its sides, with the corresponding sides of shaped metallic elements arranged so that they are adjacent to it, in such a way as to obtain laminations for making stators and/or rotors of rotary electric machines or for making laminated ferromagnetic cores of static electric machines.

The invention also concerns a lamination obtained by joining a plurality of said shaped metallic elements.

Furthermore, the invention concerns the rotor, the stator or the laminated ferromagnetic core obtained by stacking a plurality of said laminations of the invention, the rotary electric machine comprising said stator and/or said rotor arranged coaxially with each other and the static electric machine comprising said laminated ferromagnetic core.

Finally, the invention concerns the method and two types of apparatus suited to make the lamination by means of said shaped metallic elements.

It is known that rotary electric machines, used both as motors for generating movement and as electric energy generators, are substantially constituted by a fixed hollow portion, called stator, with a cylindrical portion, called rotor and connected to the rotation shaft, rotating inside it.

It is also known that static electric machines, in particular transformers, comprise a laminated ferromagnetic core of the column or mantle type.

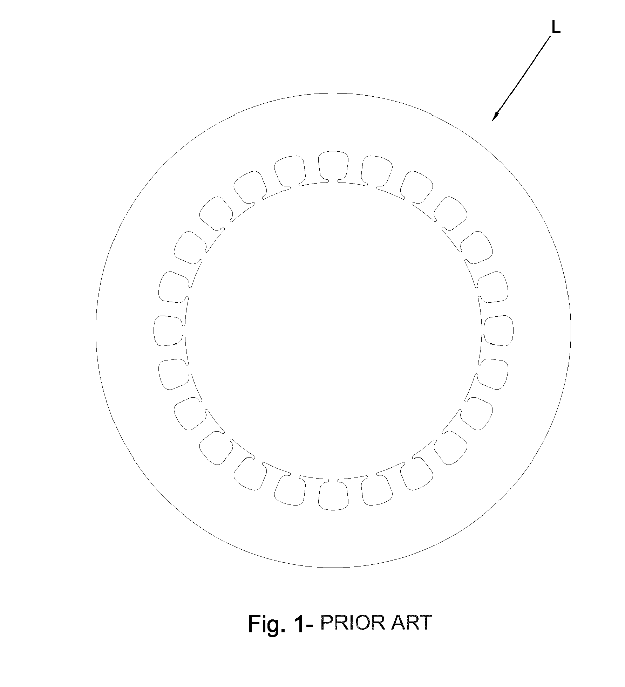

To make the stator and the rotor of a rotary electric machine or the laminated ferromagnetic core of a static electric machine special elements made of a metallic material are stacked on one another, said elements having a thickness in the order of a few tenths of a millimetre and being called laminations **L** in technical jargon, and an example of said elements being shown in Figure 1 that illustrates the state of the art.

In order to be able to stack the laminations **L** in a stable manner for the purpose of making the stator, the rotor or the laminated ferromagnetic core, the same laminations **L** are secured to one another using special connection techniques like, for example, die-casting, riveting, welding or other equivalent processes.

It is also known that in most cases said laminations **L** are obtained from foils **M** made of a metallic material, which are subjected to a pressing process carried out by means of special pressing devices.

In particular, the most known and most used techniques for making the laminations **L** comprise a pressing process of the so-called type by steps or stages.

Using these techniques, in fact, it is possible to obtain laminations **L** made in a single body, in a shape corresponding to the shape of the stator, the rotor or the ferromagnetic core to be obtained.

However, as extensively described in the Italian patent application no. VI2008A000159, filed by the same applicant, said techniques used to obtain said laminations **L** disadvantageously pose the drawback of involving a considerable waste of metallic material.

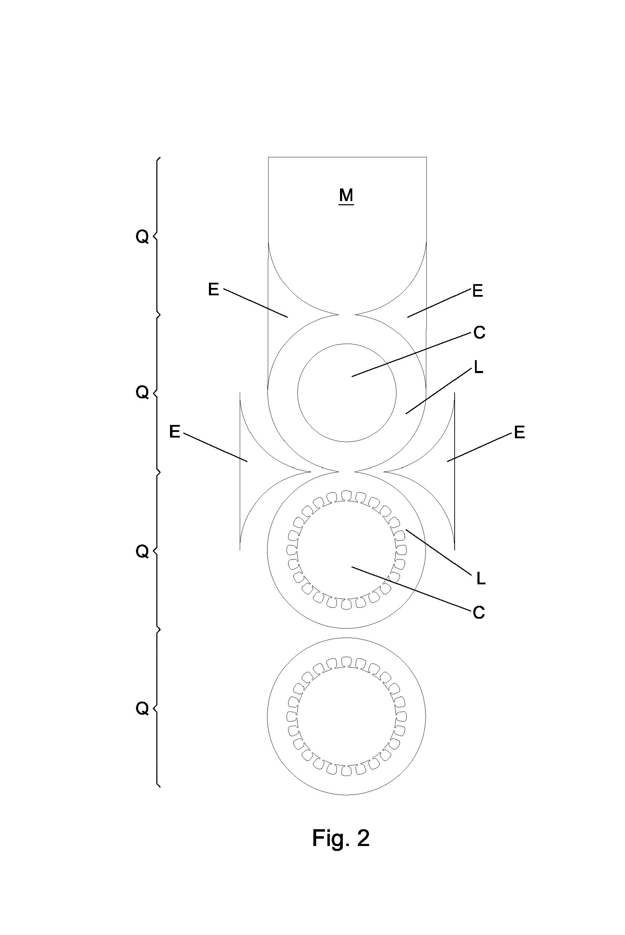

In fact, as can be observed in Figure 2, which illustrates the known art and shows a process for making a stator by steps, the angular ends **E** and the centre portion **C** of each rectangular element **Q** of the metallic foil **M,** from which the same laminations **L** are obtained, are not exploited and consequently they become unused scrap material that can be possibly recovered through a founding process.

For this reason, the above mentioned patent application no. VI2008A000159 has the purpose of reducing the amount of scrap material produced while pressing the laminations **L,** and intends to obtain, on the same pieces of material that were previously considered scrap, shaped metallic elements that when joined to one another make it possible to obtain laminations that can be used to make the stator and the rotor of an "exciting device".

The exciting device is provided with a rotor and a stator, used to power the electromagnets arranged on the main rotor of an alternator.

In particular, according to the technique proposed by the above mentioned patent application, the various shaped metallic elements are joined to one another by welding.

To disadvantage, as explained above, the laminations obtained in this way are only suited to be used for making the stator and/or the rotor of an exciting device, and not also for making the main stator and rotor of a rotary electric machine or for making the ferromagnetic core of a static electric machine. This happens because the welding technique used to join the various shaped metallic elements causes, in the connection area, a magnetic flux loss that is not negligible and can reach 50% compared to a lamination made in a single body.

Therefore, to disadvantage, the use of the laminations obtained in this way to make the main stators and rotors of rotary electric machines or to make the ferromagnetic cores of static electric machines would involve a high loss of efficiency of the same machines, thus making said laminations clearly unsuitable for that purpose.

The present invention intends to overcome the drawbacks described above.

In particular, it is the object of the invention to provide shaped metallic elements that, when joined to one another, make it possible to obtain laminations whose efficiency is just a few percentage points lower than that of the laminations made in a single body.

For this reason, it is the object of the present invention to provide shaped metallic elements that make it possible to obtain laminations that can be used to make the main stator and/or rotor of a rotary electric machine and the laminated ferromagnetic core of a static electric machine.

It is another object of the present invention to obtain the shaped metallic elements from portions of a metallic foil that were previously considered scrap material.

Consequently, it is the object of the present invention to provide shaped metallic elements that make it possible to reduce the costs involved when making the rotors, the stators and the laminated ferromagnetic cores of rotary and static electric machines, respectively.

The objects described above are achieved by a shaped metallic element having the characteristics described in the main claim.

In particular, the shaped metallic element that is the subject of the invention is **characterized in that** it has at least two sides with matching shaped profile so that they can be coupled through interference with the corresponding sides with matching shaped profile of shaped metallic elements arranged so that they are adjacent to the metallic element itself.

Advantageously, said solution makes it possible to reduce to a minimum the magnetic flux loss in the connection area, and thus to slightly vary the efficiency compared to the laminations obtained in a single body.

Further characteristics of the shaped metallic elements are described in the dependent claims.

The invention includes also the lamination obtained by joining a plurality of said shaped metallic elements, the rotor, the stator and the laminated ferromagnetic core obtained by stacking a plurality of said laminations and finally the rotary electric machine and the static electric machine respectively comprising at least said rotor or at least said stator and said laminated ferromagnetic core. Finally, the invention also includes the method and two types of apparatus for making the lamination using said shaped metallic elements.

The objects and advantages described above will be highlighted in greater detail in the description of a preferred embodiment of the invention that is provided here below by way of non-limiting example with reference to the attached drawings, wherein:
- Figure 1 shows a lamination carried out according to the known art obtained in a single body and used to make the main stator of a rotary electric machine;
- Figure 2 shows the pressing technique of the known art used to obtain a lamination in a single body starting from a foil made of a metallic material;
- Figure 3 shows the shaped metallic element of the invention according to a first embodiment;
- Figure 4 shows the shaped metallic element of the invention according to a second embodiment;
- Figure 5 shows a lamination of the invention obtained by coupling through interference a plurality of shaped metallic elements of the invention;
- Figure 6 shows the stator of the invention obtained by stacking a plurality of laminations of the invention;
- Figure 7 shows the rotor of the invention obtained by stacking a plurality of laminations of the invention;
- Figure 8 shows the rotary electric machine comprising at least the stator and/or at least the rotor of the invention;
- Figure 9 shows the laminated ferromagnetic core of the invention obtained by stacking a plurality of laminations of the invention;
- Figure 10 shows a template on which a plurality of shaped metallic elements of the shaped element of Figure 3 is arranged in such a way as to define the shape of the stator to be obtained;
- Figure 11 shows a top view of the apparatus for making the laminations of the invention;
- Figure 12 shows an axonometric view of the first type of apparatus for making the laminations of the invention;
- Figure 13 shows the cross section of a first axonometric view of the loading unit belonging to the first type of apparatus for making the laminations of the invention;
- Figure 14 shows the cross section of a second axonometric view of the loading unit belonging to the first type of apparatus for making the laminations of the invention;
- Figure 15 shows a view from below of the first rotary plane belonging to the loading unit of the first type of apparatus for making the laminations of the invention;
- Figure 16 shows a top view of a processing unit of the first type of apparatus for making the laminations of the invention;
- Figure 17 shows an axonometric view of the rotary plane belonging to the second type of apparatus for making the laminations of the invention;
- Figure 18 shows a top view of the rotary plane belonging to the second type of apparatus for making the laminations of the invention;
- Figure 19 shows an axonometric view of the rotary plane and of the conveyors of the second type of apparatus for making the laminations of the invention.

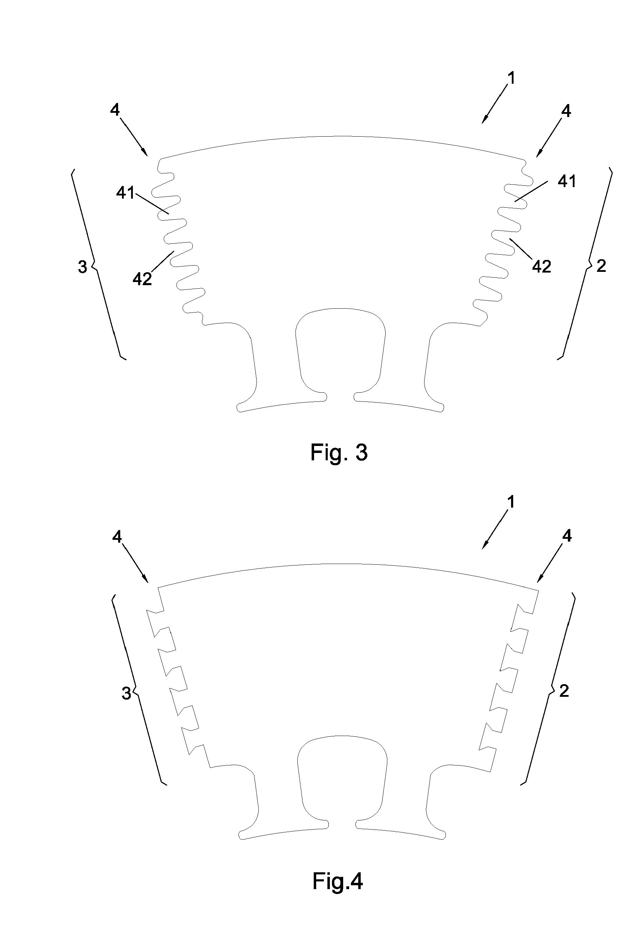

The shaped metallic element of the invention for making the laminations of a stator and/or a rotor of a rotary electric machine or of a laminated ferromagnetic core of a static electric machine is represented as a whole in Figures 3 and 4, where it is indicated by **1.**

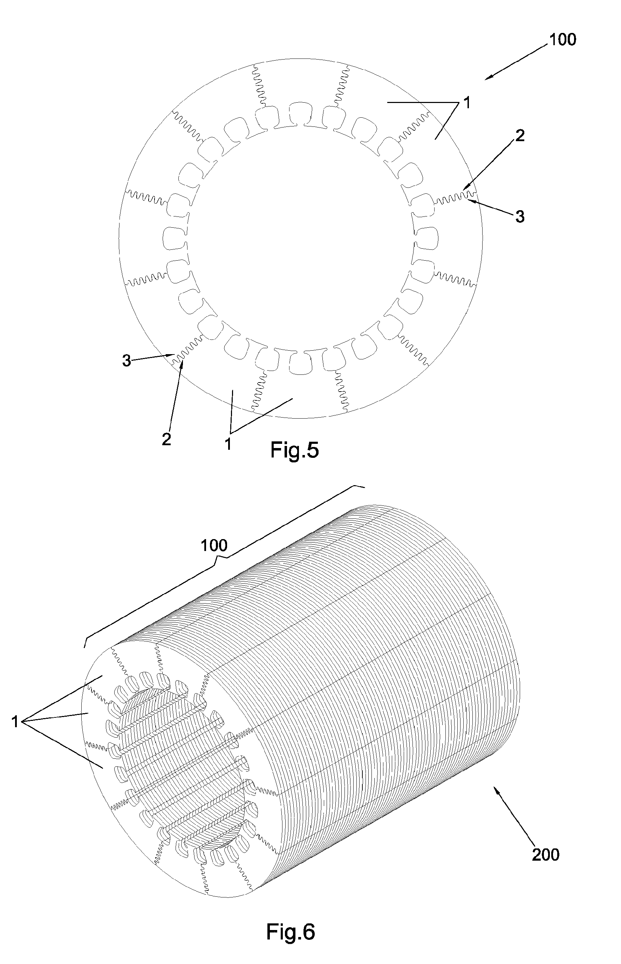

It can be observed that said shaped metallic element **1** is suited to be connected, at the level of two of its sides **2** and **3,** to shaped metallic elements **1** of the invention arranged adjacent to it, in such a way as to define a lamination **100** suited to be successively used to make a stator **200** or a rotor **300** of a rotary electric machine **400** or a laminated ferromagnetic core **500** of a static electric machine, respectively shown in Figures 5, 6, 7, 8 and 9. According to the invention, each side **2** and **3** of the shaped metallic element **1** is provided with a shaped profile **4** matching a corresponding side **2** and **3** of the shaped metallic element **1** arranged so that it is adjacent to the first one, so that said shaped metallic elements **1** can be coupled to each other through interference.

Preferably but not necessarily, as shown in Figure 3, said shaped profile **4** is provided on the entire length of each one of the two sides **2** and **3.** Said last characteristic advantageously makes it possible to obtain the coupling through interference along the entire extent of the two sides **2** and **3** of two adjacent shaped metallic elements **1.** Consequently, in this situation the percentage value of the magnetic flux loss in said coupling section is negligible compared to a lamination made in a single body.

Furthermore, according to the preferred embodiment of the invention, as can be observed in Figure 3, each one of said sides **2** and **3** has a matching comb-shaped profile **4.**

In greater detail, as can be observed in Figure 3, said comb-shaped profile is provided with teeth **41** and hollows **42** with a substantially triangular profile.

It is important to underline that the matching shaped profile **4** at the level of the first side **2** of the shaped metallic element **1** is made in such a way that it can exactly match the matching shaped profile **4** provided on the second side **3** of the same shaped metallic element **1.**

This advantageously makes it possible to produce shaped metallic elements **1** equal to each other for each individual type of stator, rotor or laminated ferromagnetic core, considerably simplifying the design and production process of said stator, rotor and core.

In an alternative embodiment represented in Figure 4, the matching shaped profile **4** provided on the first side **2** of the shaped metallic element **1** of the invention has a dovetail profile, while the matching shaped profile **4** of the second side **3** is complementary to and suited to be matched with the dovetail profile of the first side **2.**

Also in this case, therefore, each first side **2** of each shaped metallic element **1** can be coupled through interference with each second side **3** of the shaped metallic element **1** arranged so that it is adjacent to the first one.

In further alternative embodiments of the invention, the matching shaped profiles **4** of said sides **2** and **3** can be of a different type compared to those described above, provided that they allow the coupling through interference of the shaped metallic elements **1** arranged so that they are adjacent to each other, thus advantageously avoiding the need to join them using welding techniques.

In this way, therefore, a connection and a direct contact are obtained between each pair of shaped metallic elements **1** over the entire length of the connection area of the sides **2** and **3,** as can be observed in Figure 5.

This advantageously makes it possible to have a minimal loss of magnetic flux along the connection area, while maintaining the efficiency of the stators, rotors and laminated ferromagnetic cores made with said shaped metallic elements very similar to the efficiency of the stators, rotors and laminated ferromagnetic cores made with laminations in a single body.

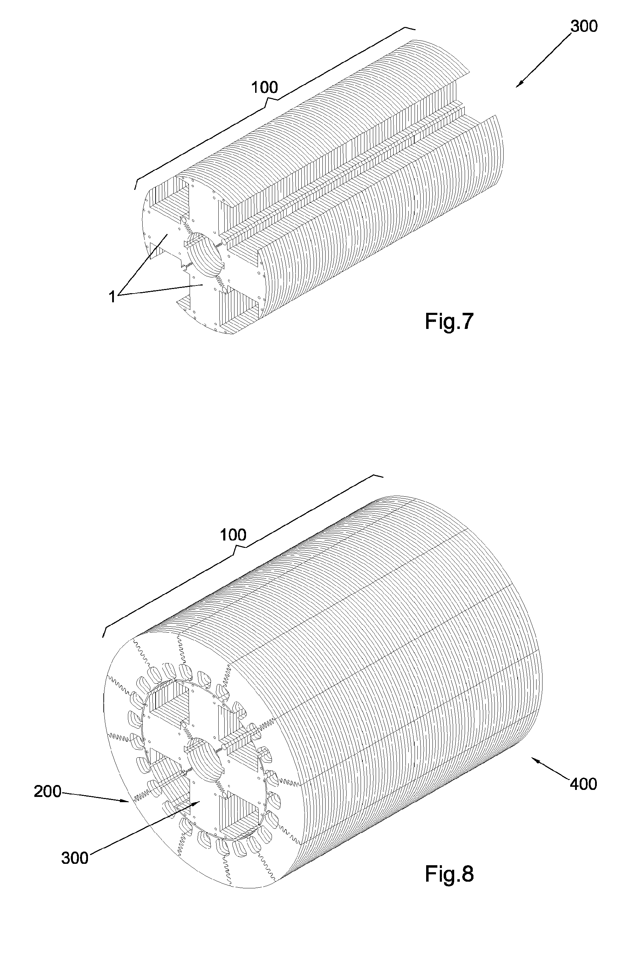

As mentioned above, the invention concerns also the lamination **100,** shown in Figure 5, for making the stators **200** or rotors **300** of a rotary electric machine **400** and for making the laminated ferromagnetic cores **500** of a static electric machine, obtained by joining through interference a plurality of shaped metallic elements **1** at the level of said sides **2** and **3** with matching shaped profile **4.** The invention includes also the stator **200** and the rotor **300** of a rotary electric machine **400** and the laminated ferromagnetic core **500** of a static electric machine, respectively shown in Figures 6, 7 and 9, obtained by stacking a plurality of laminations that in turn are made by joining through interference a plurality of shaped metallic elements **1** according to the invention. Furthermore, the invention includes also the rotary electric machine **400** shown in Figure 8, comprising at least the stator **200** or at least the rotor **300,** arranged coaxially with each other, and the static electric machine, not illustrated in the figures, comprising the above mentioned ferromagnetic core **500.**

Finally, the invention concerns the method and two types of apparatus for making said laminations **100** according to the invention.

In particular, according to the preferred embodiment of the method of the invention, the shaped metallic elements **1** are obtained, through a pressing technique, at the level of the unused portions of a metallic foil from which laminations in a single body are obtained, always by pressing.

However, in an alternative embodiment of the method of the invention, it cannot be excluded that said shaped metallic elements **1** are obtained on a metallic foil specifically used for pressing said elements **1.**

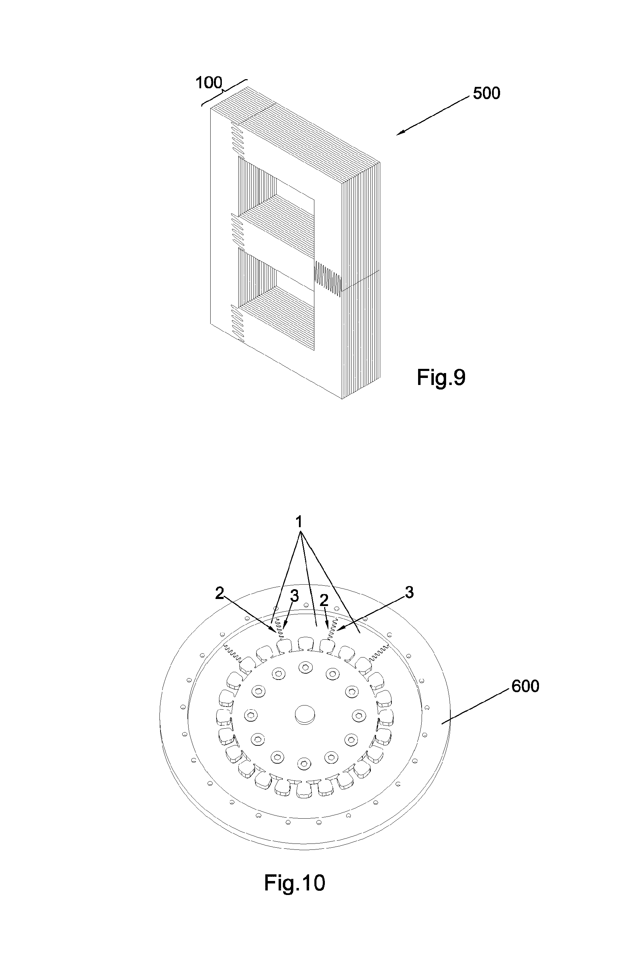

In particular, according to said alternative, it is possible to define in an optimal way the position where each individual shaped metallic element **1** is pressed, so as to better exploit the whole surface area of the metallic foil itself. Successively, according to the method of the invention, as shown in Figure 10, the shaped metallic elements **1** are arranged in a template **600** comprising a plurality of seats **601** that together define the shape of the stator **200,** of the rotor **300** or of the ferromagnetic core **500** to be obtained.

The example of Figure 10 clearly shows a template **600** for making a stator **200.**

Finally, according to the method of the invention, said shaped metallic elements **1,** previously arranged in the corresponding seats **601** in the template **600,** are fixedly coupled to each other by pressing, in such a way that each side **2** or **3** with matching shaped profile **4** of each shaped metallic element **1** is coupled through interference with the side **2** or **3** of the shaped metallic element **1** arranged so that it is adjacent to it.

In this way, the shaped metallic elements **1** are fixedly constrained to each other, thus forming a lamination that will successively be used to make a stator **200** or a rotor **300** or a laminated ferromagnetic core **500** substantially offering the same performance as a stator, a rotor and a laminated ferromagnetic core made with laminations obtained in a single body.

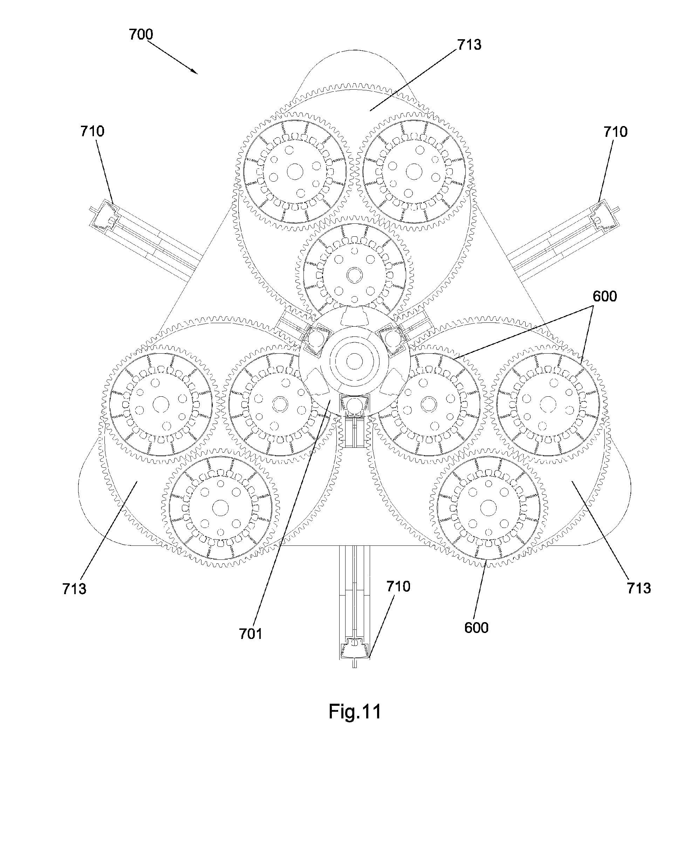

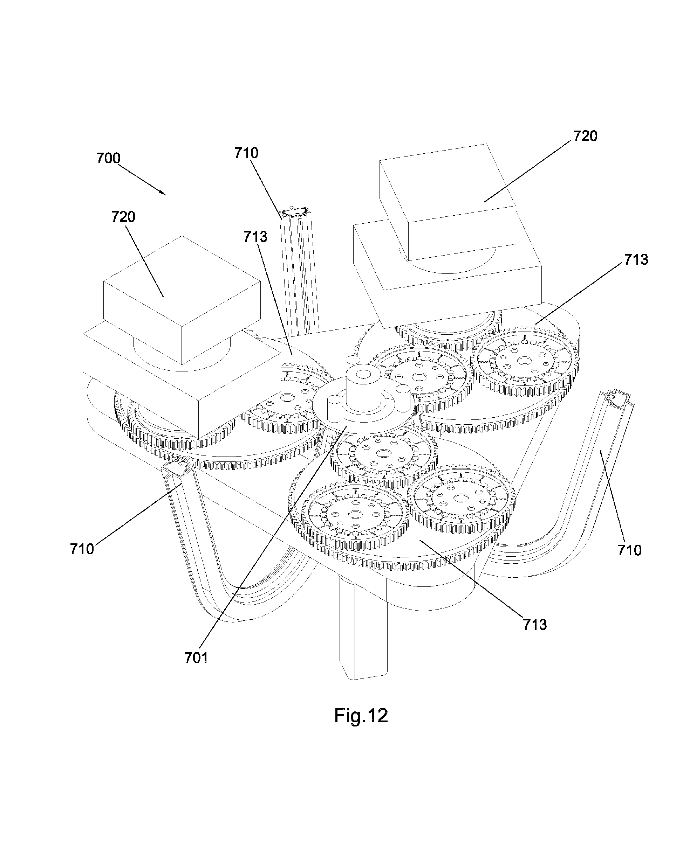

The method of the invention described above is preferably implemented by means of the first type of apparatus **700** for making the laminations **100,** said apparatus being also the subject of the invention and being illustrated as a whole in Figures 11 and 12.

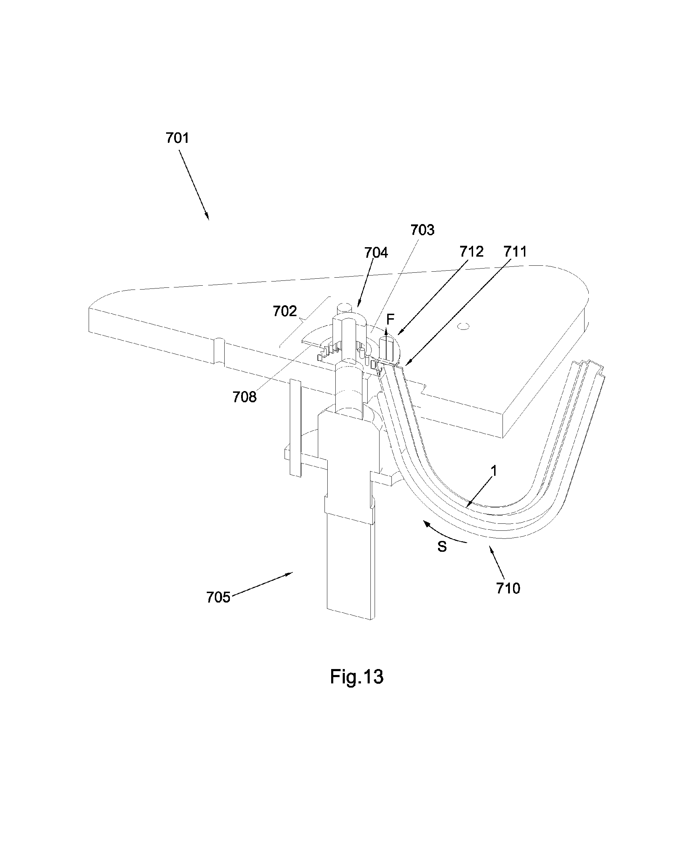

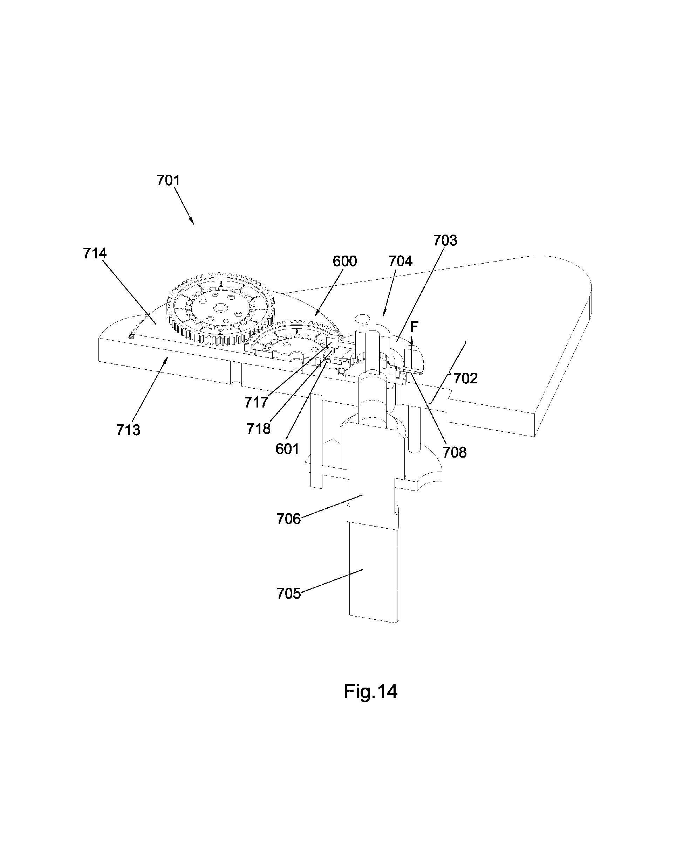

In particular, the apparatus **700** of the invention comprises a loading unit **701,** shown in Figures 13 and 14 and provided with a first rotary plane **702,** called "carousel" in technical jargon, preferably circular in shape and revolvingly coupled with drive means **705** at the level of its centre **704** by means of a transmission shaft **706.**

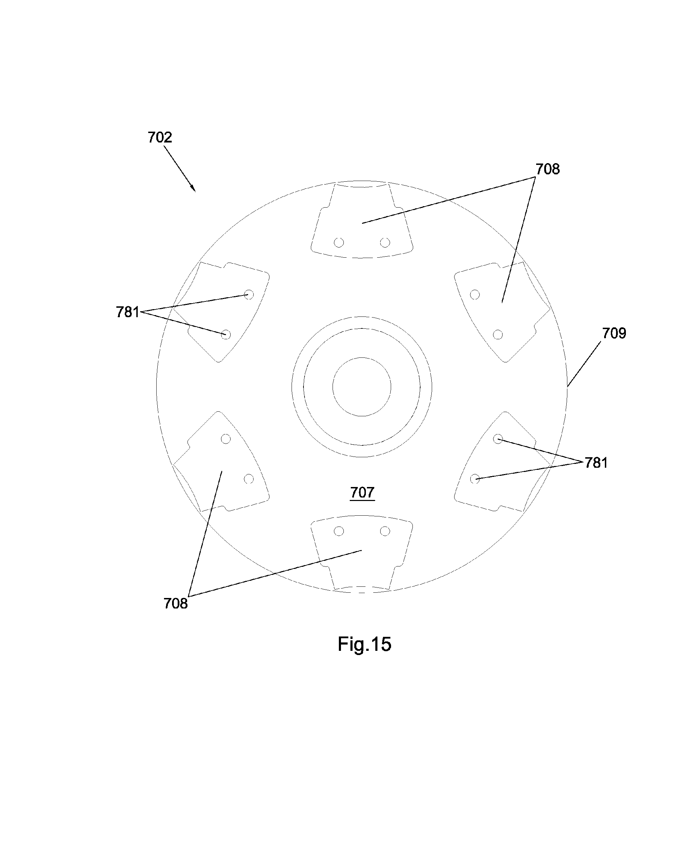

Said first rotary plane **702** is provided, at the level of its underside **707,** shown in Figure 15, with a plurality of housings **708** distributed in sequence close to the perimeter **709** of the same rotary plane **702.**

The shape and thickness of said housings **708** are substantially identical to the shape and thickness of said shaped metallic elements **1** of the invention, so that each one of said housings **708** is able to house and hold a single shaped metallic element **1** at a time.

In particular, each one of the housings **708** is provided with locking means **781** suited to hold the shaped metallic element **1** arranged inside it during the rotation of the first rotary plane **702.**

In the preferred embodiment of the apparatus that is the subject of the invention, the locking means **781** preferably but not necessarily comprise magnets.

With regard to the drive means **705,** these are suited to set the first rotary plane **702** rotating in a discrete way, which is also known as a movement by steps.

In particular, each discrete angular movement of the first rotary plane **702** corresponds to an angular quantity that is equal to the ratio 360°/number of housings **708.**

In this way angular positions are defined, at the level of which each housing **708** of the first rotary plane **702** stops for a short time interval.

The loading unit **701** comprises also a conveyor **710,** preferably with a U-shaped profile, as shown in Figure 13, in which a plurality of shaped metallic elements **1** is stored in sequence.

Said conveyor **710** has one of its ends **711** facing the underside **707** of the first rotary plane **702,** at the level of a precise angular position, here below referred to as "first angular position", among said plurality of angular positions.

The end **711** of the conveyor **710** is provided with an opening, so as to allow the outermost shaped metallic element **1** to be extracted from the same conveyor **710.**

The loading unit **701** finally comprises magnetic means **712** arranged so that they face the upper side **703** of the first rotary plane **702** at the level of said first angular position, thus on the side opposite the end **711** of the conveyor **710** with respect to the first rotary plane **702,** as shown in Figure 13.

In practice, the components described above, belonging to the loading unit **701,** make it possible to collect one shaped metallic element **1** at a time from the end **711** of the conveyor **710,** in such a way as to arrange the same element **1** in the free housing **708** that in that specific moment is temporarily stationary in said first angular position.

In particular, in the preferred embodiment described herein, the collection operation is guaranteed both by the thrust **S,** indicated by the continuous arrow in Figure 13, to which the outermost shaped metallic element **1** is subjected by the other shaped metallic elements **1** arranged in the conveyor **710,** and by the magnetic force **F,** indicated by the broken-line arrows always in Figure 13, exerted by the magnetic means **712,** which overcomes the force of gravity and any friction, thus attracting said shaped metallic element **1** towards the housing **708.**

As explained above, since each housing **708** is provided with its own locking means **781,** the shaped metallic element **1** collected in the first angular position is held inside the same housing **708** during the successive rotation steps of the first rotary plane **702.**

As is clearly explained below, the first rotary plane **702** is set rotating in such a way as to arrange a shaped metallic element **1** at a time in a corresponding housing **708** for each individual step of the angular rotation.

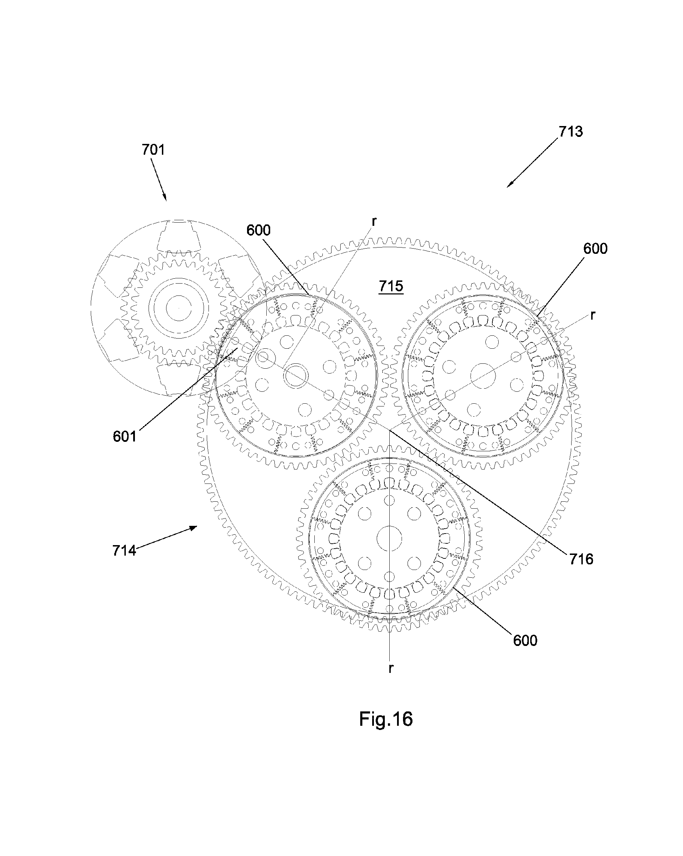

The apparatus **700** of the invention also comprises at least one processing unit **713,** shown in Figures 14 and 16, including a second rotary plane **714,** or "second carousel", preferably circular in shape, which in turn revolvingly supports on its upper side **715** three templates **600** hinged along the directions defined by three radiuses **r** of the same rotary plane **714** diverging from one another by 120°, as shown in Figure 16.

With regard to the second rotary plane **714,** this is set rotating in a discrete way, also known as a movement by steps, around its centre **716.**

More precisely, the second rotary plane **714** is set rotating so that each one of the templates **600** can temporarily assume three static positions diverging from one another by 120°, which here below are respectively defined as loading position of the template **600,** pressing position of the shaped metallic elements **1** and collection position of the lamination **100.**

In the apparatus **700** of the invention the first rotary plane **702** of the loading unit **701** and the second rotary plane **714** of the processing unit **713** are coupled with each other in such a way that each housing **708,** when it assumes a precise angular position among said plurality of angular positions, indicated here below as second angular position, is exactly superimposed to one of the seats **601** provided in the template **600** that, at the same moment, is in said loading position, as shown in Figure 11 and in Figure 14.

In this way, translation means **717** arranged so that they face the upper side **703** of the first rotary plane **702,** at the level of the second angular position, as shown in Figure 14, force the shaped metallic element **1** to exit from the housing **708** and translates towards the underlying seat **601** in the template **600.**

Preferably but not necessarily said translation means **717** comprise at least one piston **718** suited to push downwards, and therefore towards said seat **601,** the shaped metallic element **1** present in the housing **708,** as schematically shown by the arrow in Figure 14.

Obviously, in order to allow the piston **718,** arranged above the first rotary plane **702,** to push the shaped metallic element **1** downwards, the first rotary plane **702** must be provided, at the level of each housing **708,** with openings suited to allow the piston **718** to pass through said first rotary plane **702.**

It cannot be excluded, however, that in alternative embodiments of the apparatus **700** of the invention, said translation means **717** are made in a different manner, provided that they allow the shaped metallic element **1** to be extracted from the housing **708** and to be positioned in the underlying seat **601.**

In order to be able to correctly complete the loading operation of the entire template **600** arranged in the loading position, the same template **600** and the first rotary plane **702** are set rotating in a synchronized manner, so that each angular movement of the first rotary plane **702** is accompanied by a corresponding angular movement of the template **600.**

Consequently, for each housing **708** arranged at the level of the second angular position and accommodating a shaped metallic element **1** there is an underlying seat **601** in the template **600** where said shaped metallic element **1** can be positioned.

Obviously, each operation of translation of a shaped metallic element **1** from the respective housing **708,** arranged at the level of the second angular position, towards the template **600,** takes place at the same time as the operation of loading another shaped metallic element **1** in a housing **708** that is in the first angular position, in the manner explained above.

When the template **600** has been completely filled with a plurality of shaped metallic elements **1,** the second rotary plane **714** of the processing unit **713** is rotated by 120° so that the same template **600** assumes the above mentioned pressing position.

The apparatus **700** of the invention, in fact, comprises, at the level of the pressing position, pressing means **720,** schematically represented in Figure 12, suited to force the coupling by interference of the shaped metallic elements **1** into the template **600,** thus implementing the pressing step of the method of the invention.

Simultaneously with said pressing operation, the apparatus **700** of the invention provides, in the manner described above, for loading the shaped metallic elements **1** on the template **600** of the processing unit **713** presently arranged in the loading position.

When the loading and pressing operations in the respective templates **600** have been completed, the second rotary plane **714** is rotated by 120° again, so that the template **600,** on which the pressing operation has been carried out, is arranged in the collection position, at the level of which the completed lamination **100** is collected.

Preferably but not necessarily, the collection of the lamination **100** takes place through collection means that are external to the apparatus **700** of the invention.

However, it cannot be excluded that in alternative embodiments of the invention said collection means belong to the apparatus **700.**

Furthermore, the preferred embodiment of the apparatus **700** of the invention comprises three processing units **713,** as shown in Figures 11 and 12, arranged so that they diverge from one another by 120° with respect to the centre **704** of the first rotary plane **702** of the loading unit **701.**

In this case the loading unit **701** includes a conveyor **710,** magnetic means **712** and translation means **717** for each one of said three processing units **713.** Furthermore, a first and a second angular position will be defined for each one of said three processing units **713.**

However, it cannot be excluded that in different embodiments of the apparatus **700** of the invention the above mentioned processing units **713** are present in a number different from three.

In the preferred embodiment of the invention the drive means **705** of the loading unit **701** are suited to move, through suitable transmission means not illustrated in the figures, also the templates **600** arranged in the loading position of each one of the processing units **713.**

Also in this case, it cannot be excluded that in alternative embodiments of the apparatus **700** of the invention the drive means suited to move the templates **600** in the loading position are distinct from the drive means **705** belonging to the loading unit **701.**

In addition to the first type of apparatus **700** just described above, the invention includes also a second type of apparatus for making said laminations **100.** The characteristics of said second type of apparatus of the invention, indicated in Figures from 17 to 19 by reference number **800,** are described in detail here below.

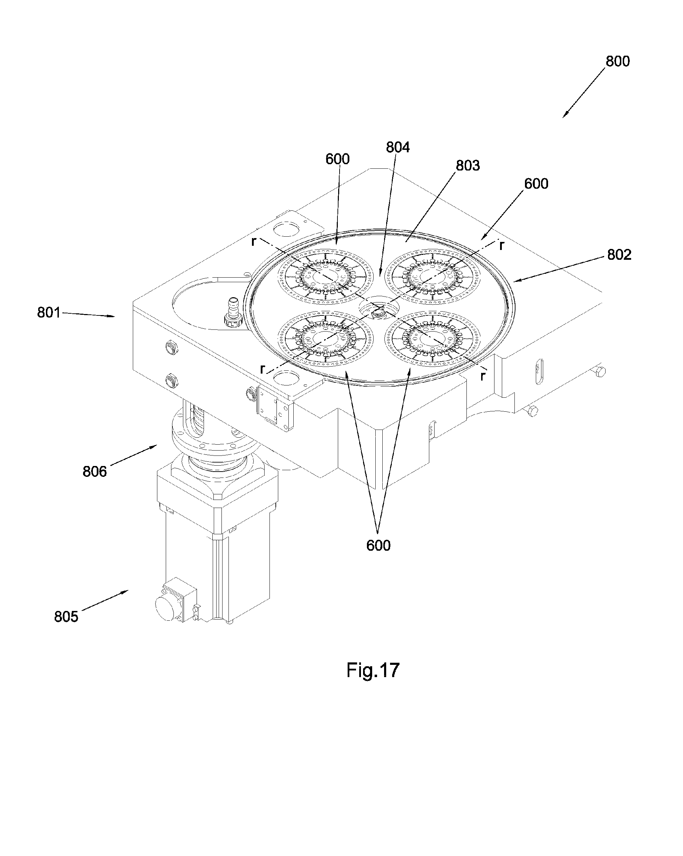

With reference to Figure 17, it can be observed that the apparatus **800** of the invention, as well as the apparatus **700,** comprises a processing unit **801,** provided with a rotary plane **802,** called "carousel" in technical jargon, preferably circular in shape and revolvingly coupled with drive means **805** through a transmission shaft **806.**

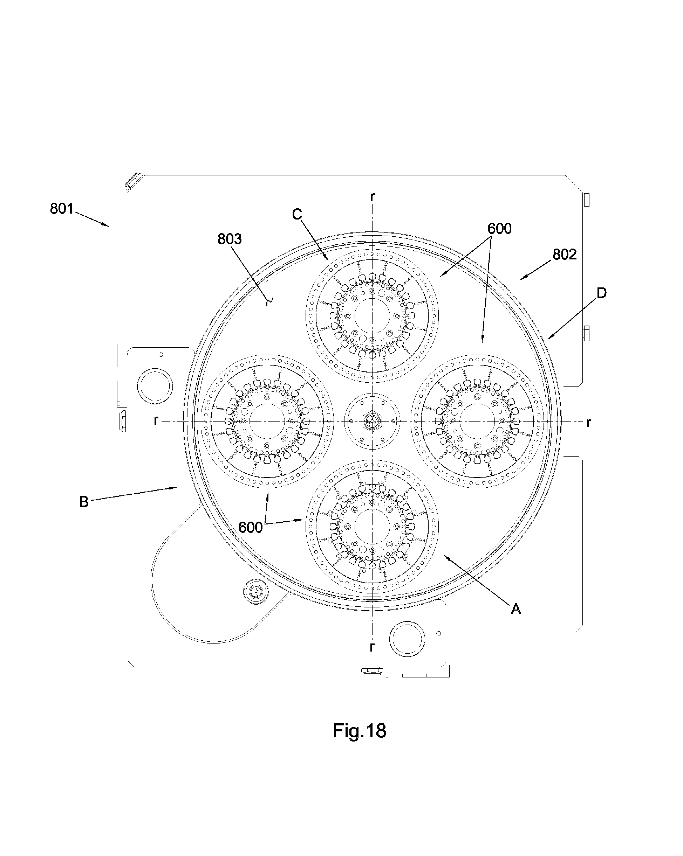

In particular, according to the preferred embodiment described herein, as shown in Figure 18, said rotary plane **802** supports on its upper side **803,** preferably but not necessarily, four templates **600** arranged along four radiuses r of the same plane **802** diverging from one another by 90°.

Said rotary plane **802** of the processing unit **801** is configured so as to be set rotating around its centre **804** in a discrete manner, so that each template **600** can temporarily assume four static positions diverging from one another by 90°, here below respectively defined first loading position of the template **600** (indicated by **A** in Figure 18), second loading position of the template **600** (position **B),** pressing position **C** of the shaped elements **1** and collection position **D** of the lamination **100.**

It cannot be excluded, however, that in different embodiments of said second type of apparatus **800** of the invention the number of said loading positions is higher than two and, consequently, the number n of templates **600** arranged on the upper side of the rotary plane **802** and the number n of overall static positions that each one of said templates **600** can assume on the rotary plane **802** is higher than four.

In particular, the n radiuses **r** of said rotary plane **802** at the level of which the templates **600** are arranged and, furthermore, the n static positions that each template **600** can assume diverge from one another by an angle equal to 360°/n.

In general, said second type of apparatus **800** of the invention includes, for the reasons that will be explained here below, the presence of at least two loading positions, one pressing position and one collection position.

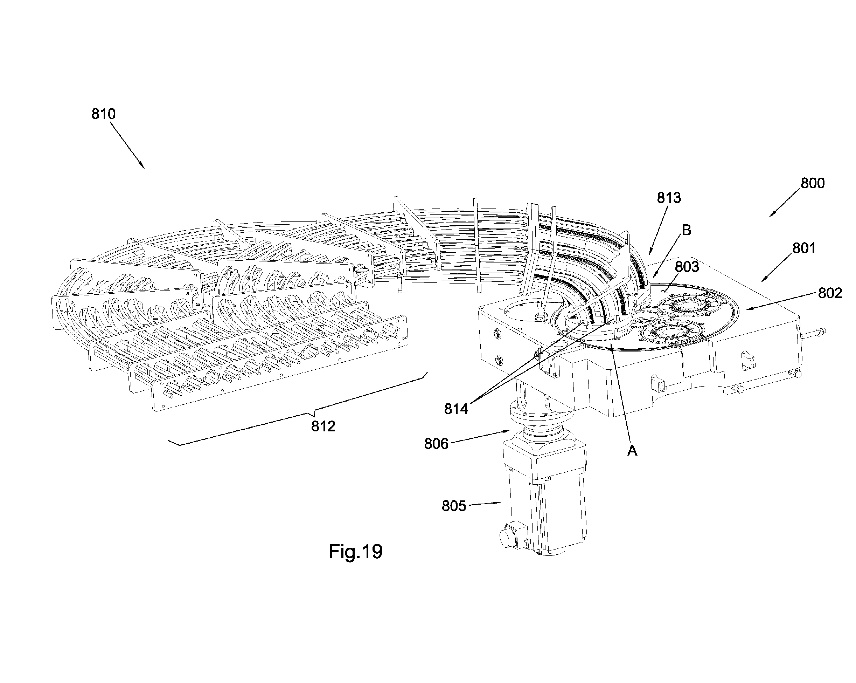

With regard, again, to the preferred embodiment of the apparatus **800,** as shown in Figure 19, it also comprises a loading unit **810** provided with a storage unit, not illustrated in the figures, suited to contain a plurality of said shaped elements **1.** A plurality of conveyors **812,** illustrated in Figure 19, is operatively connected to said storage unit. Each one of said conveyors **812** also has its distal end **813,** with respect to the storage unit, facing the upper side **803** of said rotary plane **802,** at the level of one of the two loading positions **A** or **B.** In detail, at the level of said ends **813,** the conveyors **812** are provided with an opening **814,** so that the shaped metallic elements **1** are transported, in sequence, by each conveyor **812** from said storage unit to a specific seat **601** provided in one of the two templates **600** arranged in the first or in the second loading position **A** and **B.** In particular, each conveyor **812,** belonging to said plurality of conveyors **812,** is arranged in such a way that it has its opening **814** facing over a specific seat **601** distinct from the other seats **601** over which the openings **814** of the other conveyors **812** are facing, so that when a template **600** passes beyond both the loading positions **A** and **B,** in all said seats **601** there is a single shaped metallic element **1.**

According to the preferred embodiment of the apparatus **800** of the invention shown in Figure 19, in which each template **600** comprises twelve of said seats **601** for the shaped metallic elements **1,** as clearly shown in Figure 18, the loading unit **810** in turn comprises twelve conveyors **812,** six of which have their distal ends **813** facing six seats **601** provided in a template **600,** when said template is arranged in the first loading position **A.**

Regarding the other six conveyors **812,** as shown always in Figure 19, they have their distal ends **813** facing the remaining six seats **601** remained empty of the same template **600,** when the latter is arranged at the level of the second loading position **B.**

In even greater detail, according to the preferred embodiment of the apparatus **800** of the invention, the first six conveyors **812** are suited to arrange the shaped metallic elements **1** at the level of a first group of seats **601** of the template **600** that are spaced from one another by other seats not belonging to said first group.

In other words, in the case where the template **600** has twelve seats **601,** as in the preferred embodiment described herein, said conveyors **812** are configured, for example, in such a way as to arrange the shaped metallic elements **1** at the level of the group of seats **601** comprising the first, the third, the fifth, the seventh, the ninth and the eleventh seat. In this case, therefore, each seat **601** belonging to the first group is spaced from the other seats **601** of the same group by a seat **601** that is temporarily left free.

In the same way, in the second loading position **B,** the conveyors **812** are configured so as to arrange the shaped metallic elements **1** at the level of a second group of seats **601** of the template **600** that are spaced from one another and free after the completion of the first loading operation carried out at the level of the first loading position **A.**

In practice, referring again to the previous example, the conveyors **812** will arrange the shaped metallic elements **1** at the level of the second group of seats **601** comprising the second, the fourth, the sixth, the eighth, the tenth and the twelfth seat.

In this case, therefore, each seat **601** belonging to the second group is spaced from the seats **601** of the same group by a seat **601** that is already provided with a shaped metallic element **1.**

In this way, the shaped metallic elements **1** are arranged in the template **600** through the first and the second loading operation, on two different levels. Said arrangement on two levels is necessary because the shaped metallic elements **1** are configured, as explained above, so that they can be coupled with each other through interference by means of a pressing operation. Therefore, at the moment when said shaped metallic elements **1** are arranged in two adjacent seats **601** in the template **600,** their sides **2** and **3** with shaped profile **4** are superimposed to each other. Therefore, it would be extremely difficult to arrange shaped metallic elements **1** on adjacent seats **601** in the template **600** at the same moment, or at least their simultaneous positioning may determine a mutual position of said shaped metallic elements **1** that is not suitable for allowing the successive pressing operation to be performed.

In the alternative embodiments of the apparatus **800** of the invention in which the number of loading positions is higher than two the loading principle remains the same. In particular, for each loading position the corresponding conveyors **812** are suited to arrange the shaped metallic elements **1** at the level of a group of seats **601** spaced from one another.

In particular, differently from the preferred embodiment described herein, there may be several seats **601** interposed between two seats **601** in which the shaped metallic elements **1** are loaded at the same moment.

The arrangement of each individual shaped metallic element **1** in a specific seat **601** of the template **600,** at the level of one of the loading positions, is preferably but not necessarily guaranteed by the fact that the thickness of said seat **601** substantially corresponds to the thickness of the same shaped metallic element **1.** In this way, when the shaped metallic element **1** is arranged in one of said seats **601,** the upper side of the same is substantially coplanar with the upper side of the template **600.** Therefore, only the shaped metallic element **1** inserted in the seat **601,** among the plurality of shaped metallic elements **1** arranged in sequence on a conveyor **812,** is translated together with the template **600** through the rotation of the rotary plane **802,** while the other shaped metallic elements **1** remain in said conveyor **812.** In order to obtain the same result also at the level of the second loading position **B,** it is necessary, during the translation of the template **600** from the first loading position **A** to said second loading position **B,** to lower the bottom of the template **600** with respect to its upper side. In this way it is possible to define a space, among the shaped metallic elements **1** already positioned in the template **600** in said first loading position **A** and the upper side of the template **600,** the thickness of said space substantially corresponding to the thickness of a shaped metallic element **1.** Therefore, even in the second loading position **B,** the individual shaped metallic element **1** inserted in a still empty seat **601** will rest, with its sides **2** and **3,** against the sides **2** and **3** of the adjacent shaped metallic elements **1** already inserted at the level of the first loading position **A.** For this reason, the shaped metallic element **1** inserted at the level of the second loading position **B** will have its upper side substantially coplanar with the upper side of the template **600.** Therefore, also in this case, only the shaped metallic elements **1** inserted in the free seats **601** during the second loading operation are translated together with the template **600,** when the rotary plane **802** is set rotating, while the other shaped metallic elements **1** remain on the corresponding conveyor **812.**

The lowering and successive raising of the bottom of the template **600** during the translation of the same in the various loading positions **A** and **B** are made possible by cam means positioned at the level of the underside of the rotary plane **802** and mechanically cooperating with the templates **600.**

As in the case of the first type of apparatus **700** of the invention, also for said second type of apparatus **800,** when the template **600** is completely filled with a plurality of shaped metallic elements **1,** the rotary plane **802** of the processing unit **801** is rotated by 90° so that the same template **600** assumes said pressing position **C,** indicated in Figure 18.

The apparatus **800** of the invention, in fact, comprises, at the level of the pressing position **C,** pressing means, not represented in the figures, suited to force the coupling through interference of the shaped metallic elements **1** inside the template **600,** thus performing the pressing step of the method that is the subject of the invention.

Simultaneously with said pressing operation, the apparatus **800** of the invention provides for loading, in the manner described above, the shaped metallic elements **1** on the templates **600** of the processing unit **801** that are presently arranged in the first and second loading position **A** and **B.**

When the loading and pressing operations in the corresponding templates **600** have been completed, the rotary plane **802** is again rotated by 90° so that the template **600,** on which the pressing operation has been carried out, is arranged in the collection position **D,** at the level of which the completed lamination **100** is collected.

The collection of the lamination **100** is preferably but not necessarily carried out through collection means that are external to the apparatus **800** of the invention.

According to the above, it can thus be understood that the shaped metallic element that is the subject of the invention achieves all the set objects.

In particular, the invention achieves the object to provide shaped metallic elements that when joined to one another make it possible to obtain laminations whose efficiency is just a few percentage points lower than the efficiency of the laminations made in a single body.

For this reason, the invention also achieves the object to provide shaped metallic elements that make it possible to obtain laminations suited to be used to make the main stator and/or rotor of the rotary electric machine and not only laminations for the stator and rotor of the exciting device.

The invention furthermore achieves the object to obtain the shaped metallic elements from portions of a metallic foil that were previously considered scrap material.

Consequently, the invention also achieves the object to make shaped metallic elements that make it possible to reduce the production costs of the rotors and stators of rotary electric machines.

In the construction stage, the shaped metallic element of the invention, the lamination, the stator, the rotor, the laminated ferromagnetic core, the rotary electric machine and the static electric machine of the invention, and finally the method and the two types of apparatus for making said laminations of the invention can be subjected to changes that, although not illustrated and not described herein, must all be considered protected by the present patent, provided that they fall within the scope of the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Shaped metallic element (1) for making laminations (100) for a stator (200) and/or a rotor (300) of a rotary electric machine (400) or for a laminated ferromagnetic core (500) of a static electric machine, of the type comprising at least two sides (2, 3) suited to be fixedly joined to corresponding sides (2, 3) of at least two shaped metallic elements (1) arranged so that they are adjacent to said shaped metallic element (1), **characterized in that** said at least two sides (2, 3) have a shaped profile (4) matching the shaped profile of the sides (2, 3) of the adjacent shaped metallic elements (1) so that said shaped metallic elements (1) can be fixedly coupled with each other through interference.

2. Shaped metallic element (1) according to claim 1), **characterized in that** said matching shaped profile (4) obtained on each one of said sides (2, 3) is a comb-shaped profile.

3. Shaped metallic element (1) according to claim 1), **characterized in that** said matching shaped profile (4) obtained on a first one of said sides (2, 3) of said shaped metallic element (1) is a dovetail profile and the matching shaped profile (4) of the second one of said sides (2, 3) is complementary to the dovetail profile (4) defined on said first side (2, 3).

4. Shaped metallic element (1) according to any of the preceding claims, **characterized in that** said shaped profile (4) is provided on the entire length of said two sides (2, 3).

5. Lamination (100) for making stators (200) or rotors (300) of a rotary electric machine (400) or for making a laminated ferromagnetic core (500) of a static electric machine, **characterized in that** it comprises a plurality of said shaped metallic elements (1) coupled with each other through interference at the level of said matching shaped sides (2, 3).

6. Stator (200) of a rotary electric machine (400) of the type comprising a plurality of laminations (100) stacked on one another, **characterized in that** said laminations (100) are of the type according to claim 5).

7. Rotor (300) of a rotary electric machine (400) of the type comprising a plurality of laminations (100) stacked on one another, **characterized in that** said laminations (100) are of the type according to claim 5).

8. Rotary electric machine (400) of the type comprising a stator and a rotor arranged coaxial with each other, **characterized in that** said stator (200) is of the type according to claim 6).

9. Rotary electric machine (400) of the type comprising a stator and a rotor arranged coaxial with each other, **characterized in that** said rotor (300) is of the type according to claim 7).

10. Laminated ferromagnetic core (500) of a static electric machine of the type comprising a plurality of laminations (100) stacked on one another, **characterized in that** said laminations (100) are of the type according to claim 5).

11. Static electric machine of the type comprising a laminated ferromagnetic core (500), **characterized in that** said laminated ferromagnetic core (500) is of the type according to claim 10).

12. Method for making a lamination (100) according to claim 5), **characterized in that** it comprises the following steps:
- arranging a plurality of shaped metallic elements (1) of the type according to any of the claims from 1) to 4) in a template (600) that reproduces the shape of said stator (200) or of said rotor (300) or of the laminated ferromagnetic core (500);
- pressing said shaped metallic elements (1) arranged in said template (600) so that the sides (2, 3) of said adjacent shaped metallic elements (1) are coupled with each other through interference.

13. Apparatus (700) for making a lamination (100) of the type according to claim 5), **characterized in that** it comprises:
- a loading unit (701) provided with a first rotary plane (702), preferably circular in shape, revolvingly coupled with drive means (705) at the level of its centre (704) by means of a transmission shaft (706), said first rotary plane (702) being provided, at the level of its underside (707), with a plurality of housings (708) distributed in sequence close to its perimeter (709) and suited to house and hold a shaped metallic element (1), said first rotary plane (702) being furthermore suited to be set rotating in a discrete way by said drive means (705) in such a way as to define a plurality of angular positions at the level of which each one of said housings (708) is suited to stop temporarily, said angular positions comprising a first angular position in which said shaped metallic element (1) is loaded in one of said housings (708) and a second angular position at the level of which said shaped metallic element (1) is unloaded from said housing (708);
- at least one processing unit (713) provided with a second rotary plane (714), preferably circular in shape, which revolvingly supports on its upper side (715) three templates (600) hinged along the directions defined by three radiuses (r) of said second rotary plane (714) diverging from one another by 120°, said second rotary plane (714) being suited to be set rotating in a discrete way so that each one of said templates (600) is suited to temporarily assume three static positions diverging from one another by 120° and defined as the loading position of the template (600), the pressing position of the shaped metallic elements (1) and the collection position of the lamination (100);
said first rotary plane (702) of said loading unit (701) and said second rotary plane (714) of said processing unit (713) being mutually coupled so that each one of said housings (708), when it assumes said second angular position, is superimposed to a seat (601) provided in said template (600) arranged, at the same instant, in said loading position.

14. Apparatus (800) for making a lamination (100) of the type according to claim 5), **characterized in that** it comprises:
- a processing unit (801), provided with a rotary plane (802), preferably circular in shape, revolvingly coupled with drive means (805) through a transmission shaft (806), said rotary plane (802) being provided, at the level of its upper side (803), with at least four templates (600) arranged along the directions defined by four radiuses (r) of said rotary plane (802) diverging from one another by 90°, said rotary plane (802) being suited to be set rotating in a discrete manner, so that each one of said four templates (600) can temporarily assume four static positions diverging from one another by 90°, defined first loading position (A) of said template (600), second loading position (B) of said template (600), pressing position (C) of the shaped metallic elements (1) and collection position (D) of said lamination (100);
- a loading unit (810) comprising a storage unit suited to contain a plurality of said shaped elements (1) and a plurality of conveyors (812) operatively connected to said storage unit, each one of said conveyors (812) having, at the level of its distal end (813) with respect to said storage unit, an opening (814) that faces a specific seat (601), distinct from the other seats (601), provided in one of the two templates (600) arranged at the level of said first or of said second loading position (A, B), so that when a template (600) passes beyond both said two loading positions (A, B), there is a single shaped metallic element (1) in all its seats (601).
